# EUROPEAN PATENT SPECIFICATION

(11) **EP 0 745 989 B1**
(45) Date of publication and mention of the grant of the patent: **10.03.1999**
(21) Application number: 96110665.5
(22) Date of filing: 15.04.1992
(51) Int. Cl.: G11B 15/665

(54) **A loading post holding device**
Haltevorrichtung für einen Ladestift
Support pour un galet de chargement

(30) Priority: 16.04.1991 JP 83887/91; 17.04.1991 JP 85062/91; 17.04.1991 JP 85064/91; 17.04.1991 JP 85071/91
(43) Date of publication of application: 04.12.1996
(62) Divisional of application: 92303400.3
(73) Proprietor: MATSUSHITA ELECTRIC INDUSTRIAL CO., LTD., Kadoma-shi, Osaka-fu (JP)
(72) Inventor: Konishi, Akio, Hyogo (JP); Saito, Yoshiyuki, Katano-shi, Osaka (JP); Takeda, Shuzo, Hirakata-shi (JP); Yoshio, Hideaki, Moriguchi-shi (JP); Kurumatani, Hiroshi, Amagasaki-shi, Hyogo (JP)
(74) Representative: Sorrell, Terence Gordon

(56) References cited:
- US-A- 4 520 411
- US-A- 4 556 922
- US-A- 5 021 899

## Description

The present invention relates to a loading post holding device for a magnetic recording/playback apparatus in which a magnetic tape is wound around a cylindrical rotary head cylinder, having a rotary head built therein, to record/playback a signal by the rotary head.

The prior art according to US-A-4 556 922 or US-A-4 520 411 comprises a loading post holding device with a roller on a shaft fixed to a tape carrier shuttle. The axial position of the roller is fixed by a spacer or a spring loaded mechanism.

An object of the present invention is to provide axial adjustment while maintaining a low height of the loading post holding device.

A magnetic recording/playback apparatus as disclosed in EP-A-0478278 is described below with reference to Figs. 3 and 4 of the drawings. EP-A-0478278 comprises a part of the state of the art relevant to the present application under Article 54(3,4) EPC. The present invention concerns a modified apparatus of this type. The description gives an indication of the similar parts.

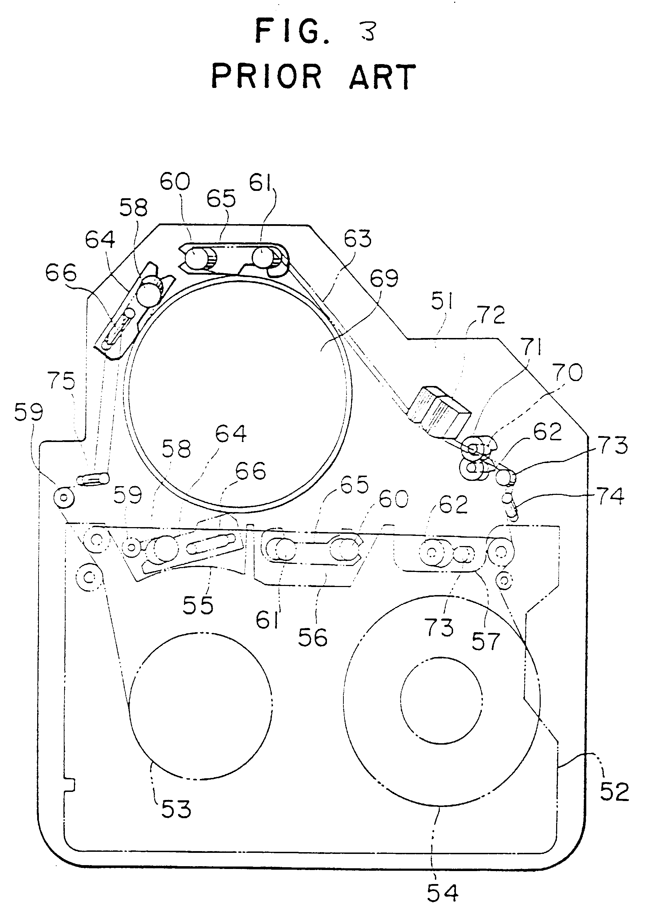

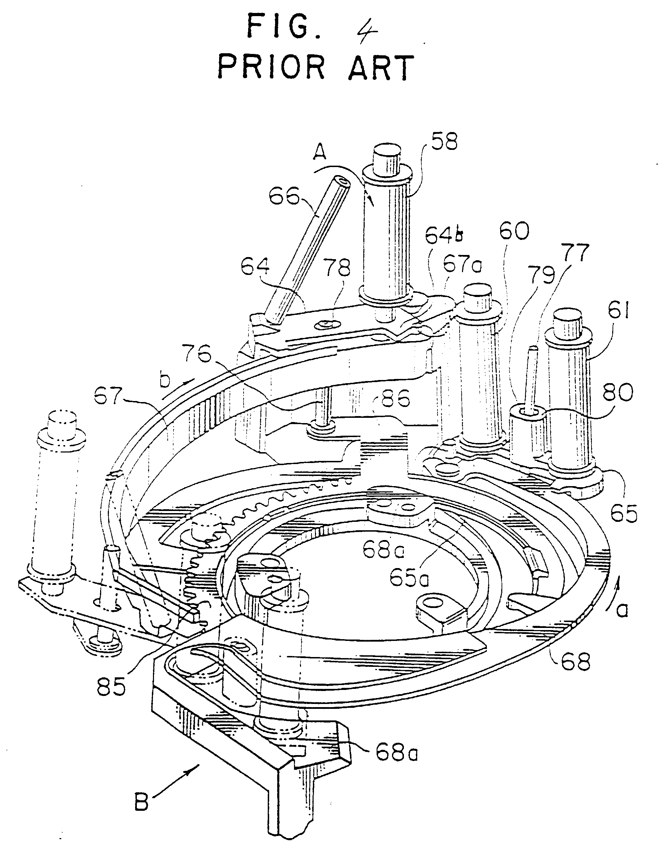

Fig. 3 is a schematic top plan view of the magnetic recording/playback apparatus and Fig. 4 is a perspective view showing principal parts of the magnetic recording/playback apparatus. Note that a rotary head cylinder 69 is omitted from Fig. 4 for brevity of the drawing and convenience of the description.

In Fig. 3, 51 denotes a chassis and 52 a tape cassette loaded on the chassis 51. A supply reel 53 and a take-up reel 54 are provided in the tape cassette 52. When the tape cassette 52 is loaded on the chassis 51, a supply side loading roller post 58 and a tension post 59; first and second take-up loading roller posts 60 and 61; and a pinch roller 62 are respectively positioned on the inside of a magnetic tape 63 in recesses 55, 56 and 57 formed in a front edge surface of the tape cassette 52. Denoted by 64 and 65 are a supply side movable carrier (tape carrier shuttle) and a take-up side movable carrier (tape carrier shuttle) on which the supply side loading roller post 58 and the first and second take-up side loading roller posts 60 and 61 are mounted, respectively. The supply side tape carrier shuttle 64 is also provided with an inclined post 66, in addition to the loading roller post 58, the inclined post 66 being positioned within the recess 55 together with the loading roller post 58. Denoted by 67 and 68 are a supply side arc shaped loading guide and take-up side arc shaped loading guide disposed along the circumference of a rotary head cylinder 69 as shown in Fig. 4, the guides 67 and 68 provided to respectively guide the supply side shuttle 64 and the take-up side tape carrier shuttle 65 during the operation of loading the magnetic tape 63. Also as shown in Fig. 4, the supply side loading guide 67 is arranged such that an end of the guide 67 along which the shuttle 64 returnably moves is raised higher than a proximal end of the guide 67 which is a home position of the shuttle 64. On the other hand, the take-up side loading guide 68 is arranged such that an end of the guide 68 along which the shuttle 65 returnably moves is lower than a proximal end of the guide 68 which is a home position of the shuttle 65.

The supply side shuttle 64 is driven by a supply side ring 85 having an arm 86 on a distal end portion of which a supply side drive shaft 76 is mounted. As will be seen from Fig. 4, the supply side tape carrier shuttle 64 is arranged to be vertically movable along the drive shaft 76 through a hole 78 in the shuttle 64. The rotary head cylinder 69 is attached substantially vertically with respect to the chassis 51. When the supply side shuttle 64 is moved along the supply side loading guide 67, the supply side loading roller post 58 withdraws the magnetic tape 63 from the supply reel 53 and winds it around the rotary head cylinder 69 in a direction extending obliquely upwardly along a left side surface area of the cylinder 69. When the take-up side tape carrier shuttle 65 is moved along the take-up side loading guide 68, the take-up side loading roller post 60 withdraws the magnetic tape 63 from the take-up reel 54 and winds it around the rotary head cylinder 69 in a direction extending obliquely downwardly along a right side surface area of the cylinder 69.

Denoted by 70 is a capstan provided on the chassis at a location outside where the tape cassette 52 is to be loaded, the capstan 70 being supported at its upper and lower ends by bearings 71 and attached to the chassis 51 such that it is inclined relative to the chassis at an angle substantially equal to those of the take-up side loading roller posts 60 and 61 at the tape terminal loading position. The inclined capstan 70 is brought into full contact with the magnetic tape 63 over its entire width, the tape running obliquely upwardly from the take-up side loading roller post 61 along a sloped path and being inclined forwardly. During completion of the tape loading operation, the capstan 70 is in press-contact with the pinch roller 62 which is moved from its position in the recess 57 of the tape cassette 52 so that the magnetic tape 63 is held between the capstan 70 and the pinch roller 62 to be driven thereby . Incidentally, the pinch roller 62 is arranged to have the same angle of inclination as that of the capstan 70 in order to be in full contact with the capstan 70 over the entire width of the tape. Denoted by 72 is an audio-control head provided at a location in the vicinity of the capstan 70 between the take-up side second loading roller post 61 when at the tape terminal loading position and the capstan 70. The audio-control head 72 is attached to the chassis 51 in such a manner that it is inclined at the same angle as that of the capstan 70 in order to facilitate contact between the audio-control head 72 and the magnetic tape 63 which is inclined forwardly and runs obliquely upwardly along a sloped path from the take-up side second loading roller post 61 to the capstan 70. Denoted by 73 is an auxiliary roller post which moves interlockingly with the pinch roller 62 such that it is positioned in the recess 57 of the tape cassette 52 before the start of the tape loading operation, and it moves together with the pinch roller 62 during the tape loading operation, thereby guiding the magnetic tape 63 running between the capstan 70 and the pinch roller 62 to a fixed inclined post 74. As regards the magnetic tape 63 fed from the take-up side second loading roller post 61 through the capstan 70 and the auxiliary roller post 73 whilst being in a forwardly-inclined posture, torsion of the magnetic tape 63 generated when the running path of the tape is converted from the sloped path into a horizontally running path is corrected by the inclined fixed post 74 which is slantingly attached to the chassis 51 before the magnetic tape 63 reaches the tape cassette 52, then the tape is wound around the take-up reel 54 of the tape cassette 52.

A loading post holding device of the type employed in the magnetic recording/playback apparatus of figures 3 and 4 will be next described with reference to the drawings.

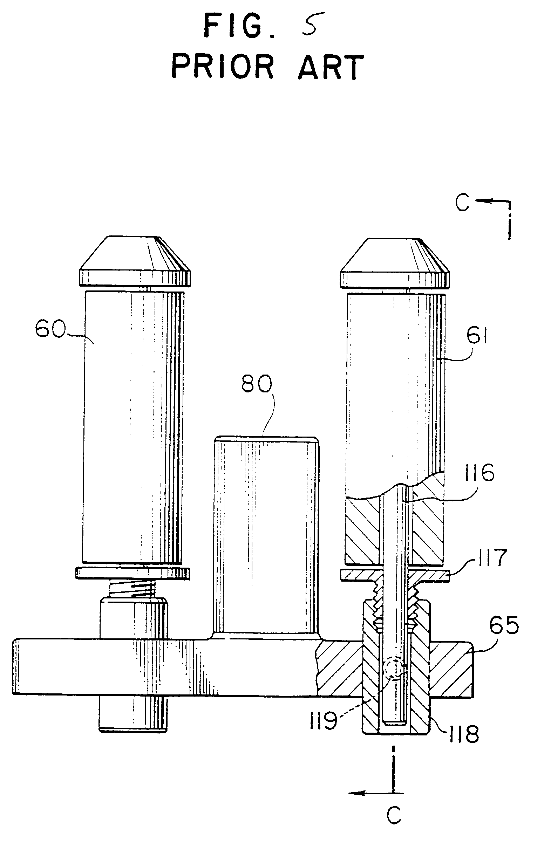

Fig. 5 is an enlarged view, partly cross-sectioned, as viewed in a direction of an arrow B in Fig. 4. In Fig. 5, 117 denotes a roller holder member for holding the roller or post 61 through which a shaft 116 is inserted. 118 denotes a pipe press-fitted in the take-up side tape carrier shuttle 65 with the end portion of the shaft 116 inserted into the pipe 118.

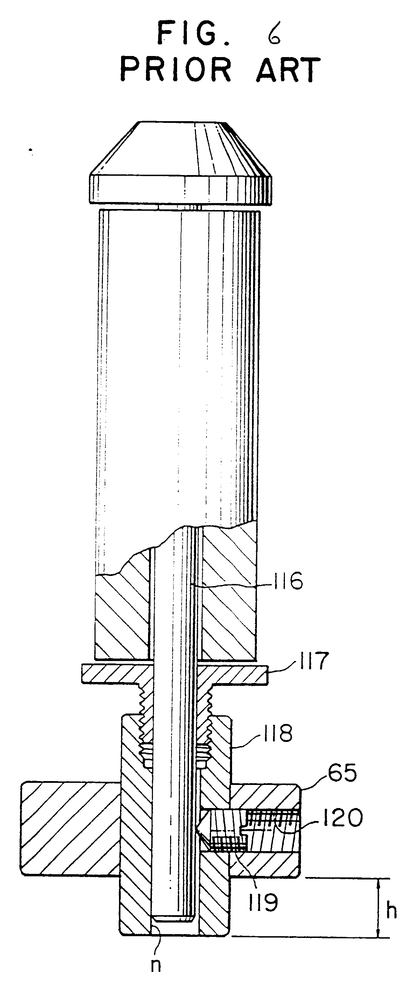

Fig. 6 is a view of a part of Fig. 5, partly cross-sectioned, as viewed in a direction of arrows C-C in Fig. 5. In Fig. 6, the shaft 116 is pressed against one side of the inner peripheral surface (a reference surface n) of the pipe 118 by the distal end of a screw 119 which is screwed into a threaded hole 120 provided at one end of the take-up side tape carrier shuttle 65, so that the shaft will not rotate. In order to press-fix the shaft 116 against the reference surface n by the distal end of the screw 119, the pipe 118 is extended downwardly below the underside of the take-up side shuttle 65 to such a dimension h that a certain length of the shaft protrudes below the point where the shaft is pressed.

The operation of this known loading post holding device will be explained below.

First, in an initial state where a tape cassette (not shown) is loaded, the supply side shuttle 64 is on standby at its initial position (or home position) and the take-up side shuttle 65 is on standby while being supported on a rest 68a, as indicated by phantom lines in Fig. 4. When a manual playback button (not shown) is pushed, power is transmitted to the ring gear 85 by a drive means (not shown) so that, on the supply side, the supply side shuttle 64 is driven in a direction of an arrow b by the supply side drive shaft 76 (see Fig. 4). Likewise, on the take-up side, the take-up side shuttle 65 is driven in a direction of an arrow a by the take-up side drive shaft 77. When a magnetic tape loading operation is completed, the supply side shuttle 64 and the take-up side shuttle 65 move to respective positions indicated by solid lines where a projection 64b of the supply side shuttle 64 is in abutment against a lug 67a and a projection 65a of the take-up side shuttle 65 is in abutment against a lug 68a.

However, the above known loading post holding device suffers from a problem in that in order to reduce the height of the magnetic recording/playback apparatus, the thickness of the take-up side shuttle 65 must be reduced because of the take-up side loading guide 68 being inclined obliquely downwardly, but the take-up side shuttle 65 requires a certain thickness for providing the threaded hole 120 into which the screw 119 is screwed to positively press-fix the shaft 116 against the reference surface n. In addition, positive press-fixing of the shaft 116 against the reference surface n also requires the pipe 118 to extend downwardly below the take-up side shuttle 65 by the dimension h, making it difficult to reduce a total height of the loading post holding device.

In the light of the above object, the present invention provides a loading post holding device for a magnetic recording/playback apparatus, comprising: a shaft, a rotatable roller into which said shaft is inserted, said shaft being provided on a tape carrier shuttle movable along a loading guide, characterised in a pipe having a hole to receive said shaft and being fixed to a part of said shuttle, a roller holder tube for retaining an axial position of said roller and holding said shaft tightly fitted in said roller holder tube, said roller holder tube having a flange at a lower end thereof and being screwed at an inner peripheral surface in its lower portion with an upper end portion of said pipe, and an urging member fixed to said shuttle, wherein said urging member always pushes the peripheral edge of said flange toward said shaft so that said shaft is pressed against one side of an inner peripheral surface of said pipe.

With the above arrangement, since a point at which the shaft is actually pressed is given by the contact position between the urging member and the flange so as to increase a level of the pressing point, the size of the pipe and the take-up side shuttle in a direction of its height can be reduced. It is thus possible to reduce a total height of the loading post holding device as low as possible.

The features of the present invention will be described with reference to the drawings, of which:-
Fig 1 is a view, partly cross-sectioned, of a loading post holding device according to an embodiment of the invention;
Fig. 2 is an enlarged view, partly cross-sectioned, of the loading post holding device of Fig. 10;
Fig. 3 is a schematic top plan view of a prior art magnetic recording/playback apparatus;
Fig. 4 is an enlarged perspective view showing principal parts of the prior art loading post driving device of Fig. 3;
Fig 5 is a view, partly cross-sectioned, taken in a direction of an arrow B in Fig. 4; and
Fig. 6 is a view of a part of Fig. 5, partly cross-sectioned, as viewed in a direction of a line C-C in Fig. 21.

An embodiment of the invention will be described with reference to the drawings.

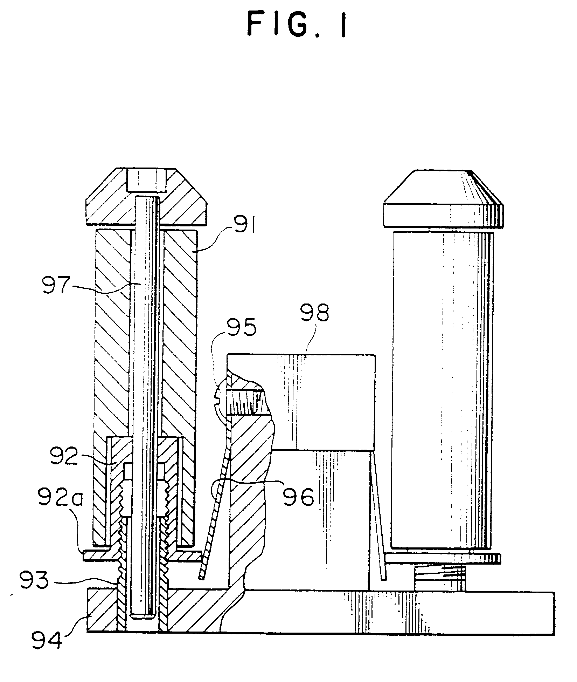

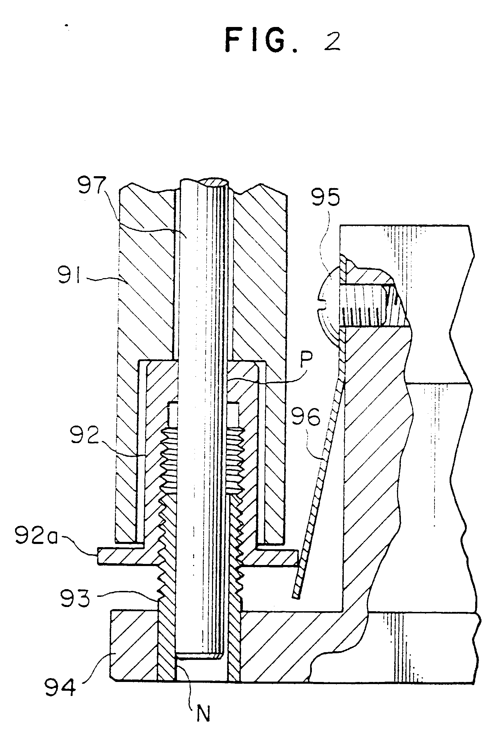

Fig. 1 is a view, partly cross-sectioned, of a loading post holding device according to an embodiment of the present invention, and Fig. 2 is an enlarged view, partly cross-sectioned, of Fig. 1.

In Figs. 1 and 2, denoted by 91 is a take-up side roller which comes into contact with a magnetic tape (not shown) during an operation of loading the tape. The take-up side roller 91 receives a shaft 97 inserted therethrough and has a thinner wall in its lower portion. 92 denotes a roller holder member which has an upper end for holding the take-up side roller 91 such that it will not slip downwardly, and has an inner peripheral surface against which a shaft 97 is press-fitted. The roller holder member 92 is formed at a lower end thereof with a flange 92a which extends outwardly, and a lower portion of the inner peripheral surface of the member 92 is threaded. 93 denotes a pipe, an upper portion of an outer peripheral surface of which is screwed into the threaded portion of the roller holder member 92, and a lower portion of which is fixedly press-fitted into a take-up side tape carrier shuttle 94. Thus, the roller holder member 92 is arranged such that its height can be changed to some extent by adjusting the screwed engagement between the member 92 and the pipe 93. A spring (urging member) 96 is fixed by a screw 95 to a lateral surface of a projection 98 formed at the centre of the take-up side shuttle 94, the spring 96 pressing outwardly on the inner edge of the flange 92. Note that the right side of the boat 94 in Fig. 1 is arranged in a similar manner to the left side and thus will not be explained.

The operation of the thus-arranged loading post holding device according to the embodiment of the present invention will now be described. Since the loading post holding device of this embodiment operates almost like the prior art device explained above by reference to Fig. 4, only the difference therebetween is given below.

At a loading start position (first position or home position), the take-up side shuttle 94 is on standby at the position indicated by phantom lines in Fig. 4. The take-up side shuttle 94 is moved by drive means (not shown) in a direction of an arrow a along the take-up side loading guide 68 (Fig. 4), followed by its stopping at a tape terminal loading position (second position).

While the take-up side shuttle 94 in the loading post holding device is moving from the loading start position to the tape terminal loading position, the flange 92a is pressed by the spring 96 at all times as shown in Fig. 2. The force borne by the flange 92a in turn presses the shaft 97 against a reference surface N of the pipe 93 through a press-fitted portion P of the roller holder member 92. Note that the screw-engagement holder member 92 is usually looser than the fitting relationship between the pipe 93 and the shaft 97. In this regard, Fig. 2 is not an exact representation.

Further, although the height of the roller holder member 92 can be controlled by adjusting the screwed engagement with the pipe 93 as stated above, the roller holder member 92 is prevented from turning by the presence of the spring 96 in course of driving between the first and second positions, because the flange 92a is always pressed by the spring 96.

As explained above, according to the embodiment of the present invention, since the point of pressing the shaft 97 can be located at so high a level relative to the take-up side shuttle 94, the distance between the lower end surface of the roller 91 and the lower end surface of the pipe 93 can be made smaller. The take-up side shuttle 94 is only required to have a height sufficient to hold the pipe 93 by press-fitting. This enables a considerable reduction in a total height of the loading post holding device. As a result, by using the roller post holder member of this embodiment in a magnetic recording/playback apparatus, it is possible to reduce the height and realise a smaller magnetic recording/playback apparatus.

## Claims

1. A loading post holding device for a magnetic recording/playback apparatus, comprising: a shaft (97), a rotatable roller (91) into which said shaft (97) is inserted, said shaft being provided on a tape carrier shuttle (94) movable along a loading guide (27), characterised in a pipe (93) having a hole to receive said shaft (97) and being fixed to a part of said shuttle (94), a roller holder tube (92) for retaining an axial position of said roller (91) and holding said shaft (97) tightly fitted in said roller holder tube (92), said roller holder tube (92) having a flange (92a) at a lower end thereof and being screwed at an inner peripheral surface in its lower portion with an upper end portion of said pipe (93), and an urging member (96) fixed to said shuttle (94), wherein said urging member (96) always pushes the peripheral edge of said flange (92a) toward said shaft (97) so that said shaft (97) is pressed against one side of an inner peripheral surface of said pipe (93).

## Patentansprüche

1. Haltevorrichtung für einen Ladestift für eine Magnetaufzeichnungs-/Wiedergabevorrichtung, umfassend: einen Stift (97), eine drehbare Rolle (91), in welche der Stift (97) eingeführt ist, welcher Stift auf einem Bandträgerhebel (94) vorgesehen ist, der entlang einer Ladeführung (27) bewegbar ist, gekennzeichnet durch ein Rohr (93), das ein Loch zum Aufnehmen des Stiftes (97) hat und an einem Teil des Hebels (94) befestigt ist, ein Rollenhalterohr (92) zum Beibehalten einer axialen Position der Rolle (91) und Halten des Stiftes (97) in dicht passendem Sitz in dem Rollenhalterohr (92), welches Rollenhalterohr (92) an seinem unteren Ende einen Flansch (92a) hat und an einer inneren Umfangsfläche in seinem unteren Abschnitt mit einem oberen Endabschnitt des Rohres (93) verschraubt ist, sowie ein an dem Hebel (94) befestigtes Druckelement (96), wobei das Druckelement (96) den Umfangsrand des Flansches (92a) stets zu dem Stift (97) hin beaufschlagt, so daß der Stift (97) gegen eine Seite einer inneren Umfangsfläche des Rohres (93) gedrückt wird.

## Revendications

1. Dispositif de maintien de colonne de chargement pour un appareil magnétique d'enregistrement/lecture, comprenant: un arbre (97), un rouleau tournant (91) dans lequel ledit arbre (97) est inséré, ledit arbre étant fourni sur une navette porte-bande (94) mobile le long d'un guide de chargement (27), caractérisé par un tuyau (93) ayant un trou pour recevoir ledit arbre (97) et étant fixé à une partie de ladite navette (94), un tube de retenue de rouleau (92) pour retenir une position axiale dudit rouleau (91) et maintenir ledit arbre (97) étroitement ajusté dans ledit tube de retenue de rouleau (92), ledit tube de retenue de rouleau (92) ayant une bride (92a) à l'extrémité inférieure du même et étant vissé au niveau d'une surface périphérique interne de sa partie inférieure avec une partie d'extrémité supérieure dudit tuyau (93), et un membre de poussée (96) fixé à ladite navette (94), dans lequelle ledit membre de poussée (96) pousse toujours le bord périphérique de ladite bride (92a) vers ledit arbre (97) de sorte que ledit arbre (97) est poussé contre un côté d'une surface périphérique interne dudit tuyau (93).
